(19)

Europäisches
Patentamt
European
Patent Office
Office européen
des brevets

(11) **EP 1 689 538 B1**

(12) **EUROPEAN PATENT SPECIFICATION**

(45) Date of publication and mention
of the grant of the patent:
**24.03.2010 Bulletin 2010/12**

(51) Int Cl.:
**B09C 1/08** *(2006.01)*   **B09C 1/10** *(2006.01)*
**B09C 1/06** *(2006.01)*

(21) Application number: **03779051.6**

(22) Date of filing: **04.12.2003**

(86) International application number:
**PCT/NL2003/000858**

(87) International publication number:
**WO 2005/053866 (16.06.2005 Gazette 2005/24)**

(54) **ELECTRICALLY ENHANCED IN SITU REMEDIATION OF CONTAMINATED SOIL**

ELEKTRISCH VERSTÄRKTE IN-SITU SANIERUNG VON KONTAMINIERTEN BÖDEN

BIOREPARATION SUR SITE ELECTRIQUEMENT ASSISTEE DE SOL CONTAMINE

(84) Designated Contracting States:
**AT BE BG CH CY CZ DE DK EE ES FI FR GB GR
HU IE IT LI LU MC NL PT RO SE SI SK TR**

(43) Date of publication of application:
**16.08.2006 Bulletin 2006/33**

(73) Proprietor: **Holland Environment B.V.
4191 PL Geldermalsen (NL)**

(72) Inventor: **POOL, Wieberen
NL-9728 RC Groningen (NL)**

(74) Representative: **van Loon, C.J.J. et al
Vereenigde
Postbus 87930
2508 DH Den Haag (NL)**

(56) References cited:
**US-A- 5 433 829      US-A- 5 846 393
US-A- 6 145 244      US-B1- 6 214 202
US-B1- 6 255 551**

## Description

The invention relates to a method of electrically enhanced *in situ* soil remediation. The invention further relates to a system and apparatus for employing such a method.

US patent No 5,433,829, by the same inventor as the present invention, describes a method of electroreclamation, which involves inducing *in situ* movement of undesired ions (ion complexes and electrical charged particles) and through soil under the influence of electric fields. This realized by inserting a grid of anodes and cathodes in the ground, or, when there is groundwater movement, by inserting a screen of alternate anodes transverse to the groundwater stream direction. Similar techniques are described in US 5,589,056 and US 5,846,393.

US patent No. 6,214, 202 describes a form of electroremediation of soil wherein a catalyst is provided near the electrodes. It is described how polarity reversals of the voltage applied between the electrodes can be used to rejuvenate the catalyst.

US patent No 6,255,551 describes an electroremediation system wherein the conductivity of the contaminated soil is measured and the DC field applied through the soil is adjusted dependent on the conductivity measurements. This is done to compensate for the effect of non-uniform contaminated media properties. A model of the extent of the contaminated media treatment is computed and the DC electrical field is adjusted as needed to control the treatment method. US patent also No 6,255,551 describes adaptation of the voltage at the electrode dependent on measurements obtained with a temperature sensing device, to avoid boiling.

Other electro-remediation techniques (not described in US patent No 5,433,829) include electrically enhanced phyto-remediation and bio-reclamation. An example of phyto-remediation is described in US 6,145,244. Phyto-remediation involves planting and harvesting plants that take up ions and ion complexes from the soil, wherein spatial extent of the uptake is increased by moving ions and ion complexes in the soil around the roots of the plants under influence of electric fields. Bio-reclamation involves electrically heating the soil to increase the speed at which chemical/physical reactions and/or biological activity removes undesired material.

*In situ* electroremediation usually involves the generation of electric fields over a considerable extent of land, typically tens or even hundreds of meters, and over a considerable duration of time, typically months or even years. In order to make such a process economically viable it is desirable to use as few and as simple electrodes as possible and to pass as high currents as usefully possible through these electrodes. Also, a considerable amount of electric energy is used. It is desirable that this energy should be used efficiently as possible.

Another cost factor is the cost of human intervention or supervision during operation over such long time and large area's. The equipment used to perform the process should be able to operate automatically, with a minimum of human intervention or supervision. This can be difficult, because the behaviour of the remediation process over such large, inevitably not entirely homogeneous land areas and such long time scales is not entirely predictable.

One important factor during automatic operation is protection against electrode failure. US 5,433,829 describes various techniques to guard proper operation of the electrodes. One technique involves keeping a record of cumulative service life of each electrode in order to select a time for replacing the electrodes. US 5,433,829 also describes that clogging of the cathodes by the precipitation of hydroxides on or near the cathode may hamper proper operation of the remediation process. Clogging occurs when a DC current is applied through an electrode for longer durations. Clogging can make a cathode useless and it can increase the resistance between anodes and cathodes, so that an increasing amount of energy is wasted by increasing heat production in the electrode filter. Similar clogging problems may occur at the anodes due to acid formation.

US 5,433,829 describes how clogging can be prevented by incorporating each electrode (anode and/or cathode) in a housing in which liquid is circulated, the housing being permeable for charged particles, but much less permeable for the bulk of the liquid, and inserting the electrodes into the ground with their housing. Reclaimed ions, ion complexes and electrical charged particles that have migrated from the soil to the housing are removed with the circulation liquid. In the case of the anode, acids formed at the anode are generally also sufficiently removed by the circulation. In the case of the cathode liquid containing added acid generally needs to be circulated through the housing in order to dissolve hydroxides, or to prevent hydroxides from forming. The pH, redox potential, conductivity and temperature of the liquid in circulated through the housing are measured and controlled for this purpose, so that, to speed up the process as much as possible, a maximum electric current is supplied that can be supplied without clogging.

In practice, it has been found that occasionally during the process a hydroxide crust develops on some cathodes. A thick crust makes a cathode useless, so that it has to be replaced in the ground and the remediation process effectively stops at the cathode until the cathode has been replaced.

The attractive aspect of phyto remediation is its low cost. Since undesired material is collected by harvesting and does not need to be collected at the electrodes, simple electrodes may be used, which merely supply the DC current needed to induce sufficient movement around the roots, without requiring a housing through which liquid is circulated to capture material. However, without circulating liquid to remove hydroxides or acids the DC current to the electrodes can only be applied for a limited time period before irreversible acidification at the anode and hydroxide forming at the cathode will take place, which makes the electrodes useless.

Heating the soil with current from electrodes can be performed with AC currents, so that clogging can be avoided. However, heating the soil with current from electrodes also has its problems. In this case boiling near the electrodes can be a problem. This can lead to deposition often material such as various carbonates precipitates at the electrodes.

Among others, it is an object of the invention to increase the reliability of efficient automated operation of in situ electro remediation in soil.

Among others it is an object of the invention to prevent reduction in the lifetime of electrodes used during in situ electro-remediation of soil.

Among others it is an object of the invention to prevent formation of hydroxide crusts on cathodes used during in situ electro-remediation of soil.

Among others it is an object of the invention minimize the loss of processing time due to problems with electrodes during in situ electro-remediation of soil.

Among others it is an object of the invention to reduce energy consumption required for in situ electro-remediation of soil.

Among others it is an object of the invention to provide for an electrical apparatus for controlling soil remediation that can be universally applied to different types of remediation processes.

A method of soil remediation according to one aspect of the invention is set forth in Claim 1. This method provides for a temporary step down in electrode current through a particular electrode when upon detection of an electrical resistance increase due to increasing electrical resistance in the current path from the surface particular electrode to the soil.

Ordinarily the resistance of a current path from an electrode, in particular the part of the path from the surface of the electrode to where the soil has homogeneous bulk properties, will not change in a short period. An increase of this resistance is indicative of problems at an electrode. By temporarily reducing the average current through the electrode by a significant step (e.g. by at least 10% and preferably to zero), the problems can be resolved.

In the case of boiling near an electrode, the temporary cut-down allows the medium around the electrode to cool down so that the process can be resumed in a normal way.

In the case of a cathode, for example, on which precipitated hydroxides cause the increase in resistance, a reduction allows acids to remove the hydroxides, because the generation of hydroxyl ions is temporarily reduced. Preferably, the average current level through the cathodes is normally controlled to the equilibrium level, or closely below the equilibrium level consistent with the supply of acid, so that the pH of the liquid around the cathode assumes a dynamic equilibrium. Upon detection of the resistance increase the average current level is reduced substantially below this current level.

Typically the current at the cathodes is cut back during a time interval of a predetermined duration between five minutes and two hours, e.g. for fifteen minutes, The length of the time interval is selected dependent on the solubility of the particular hydroxide that is expected to precipitate at the cathode. This has been found to be sufficient to counteract crust formation and does not lead to excessive loss of process time.

Preferably, also, the current is cut back only at an individual electrode for which a resistance increase is detected, or for a sub-group of the electrodes containing this electrode. It has been found that electrode problems generally do not occur simultaneously at all electrodes. Thus, by reducing current only at selected electrodes loss of process time is further limited.

The resistance increase can be measured in a number of ways. In one embodiment information about the overall resistance between a cathode and a nearby anode is measured by measuring the average current through the anode or cathode and a voltage difference between the anode and cathode, or, if the current or voltage are known in advance, by measuring the other. If one of the current or the voltage is kept constant, the resistance need not even be determined explicitly, since in this case the variable other one of the current or voltage is indicative of resistance if voltage or current is kept constant respectively. An increase in the overall resistance between anode and cathode may be used to trigger the temporary reduction.

In one embodiment the average voltages are applied between first and second electrodes and the average current through the first electrodes is controlled. Thus, an equilibrium between generation of hydroxyl ions and supply of acid can be ensured at a designed level. Average current control may be realized e.g. by adapting the duty cycle with which an electric power supply source is conductively coupled to the electrodes. This technique has the advantage that the supply system can easily be reconfigured to perform other functions, for example to supply a regulated average voltage, by controlling the duty cycle, or to reverse polarity of the currents, by providing conductive coupling in during different phases of output from an AC power supply source.

In the embodiment where the average current through the first electrodes is controlled information about overall resistance can be obtained from the voltage difference between electrodes. Alternatively the current through the second electrodes may be measured to obtain more accurate information about the resistance near the second electrodes.

The determination of resistance information from voltage differences between anodes and cathodes, and/or of currents through these electrodes has the advantage that a minimum of electrodes is needed. However, use of the overall resistance has the disadvantage that changes in the resistance of the soil that are not related to events at the electrodes at the cathode may affect the measurement. Such changes may include pH changes in the soil, precipitation of salts in the soil, temperature changes etc. To prevent this at least part of the effect of changes in resistance from the soil is preferably eliminated from the overall resistance.

The elimination of an effect of soil resistivity on detection may be realized by using at least one further electrode inserted in the soil and using a voltage drop measured from that further electrode to eliminate the effect of soil resistance changes. This can be done in various ways, for example by measuring a voltage drop between a pair of sensing electrodes in a region where constant electric currents run through the soil as an indication of the resistance of the soil, and computing from this resistance how much of the resistance from the cathode to the anode may be attributed to the soil. Often it may be assumed that the soil responds similarly at different locations in the treated area, and in this case the pair of sensing electrodes need not be located near the cathode for which the resistance is determined. Thus, one pair of sensing electrodes may be used to eliminate the effect of changes in soil resistivity from measurements obtained from voltages and/or currents at a plurality of different cathodes and or anodes.

One or both of the pair of electrodes may be a properly functioning anode or cathode. In another example, the voltage drop from a cathode to a nearby electrode (much closer than the nearest anode) is measured as a direct indication of the resistance near the cathode.

These and other objects and advantageous aspects of the invention will be illustrated using the following figures.

> Figures 1a,b show a first arrays of electrodes in a land area.
> Figure 2 shows a second array of electrodes in a land area
> Figure 3 shows an electric power supply apparatus
> Figures 4a,b show voltages supplied by an electric power supply apparatus
> Figure 5 shows a graph of collection efficiency as a function of voltage
> Figure 6 shows a graph of threshold levels as a function of groundwater flow speed

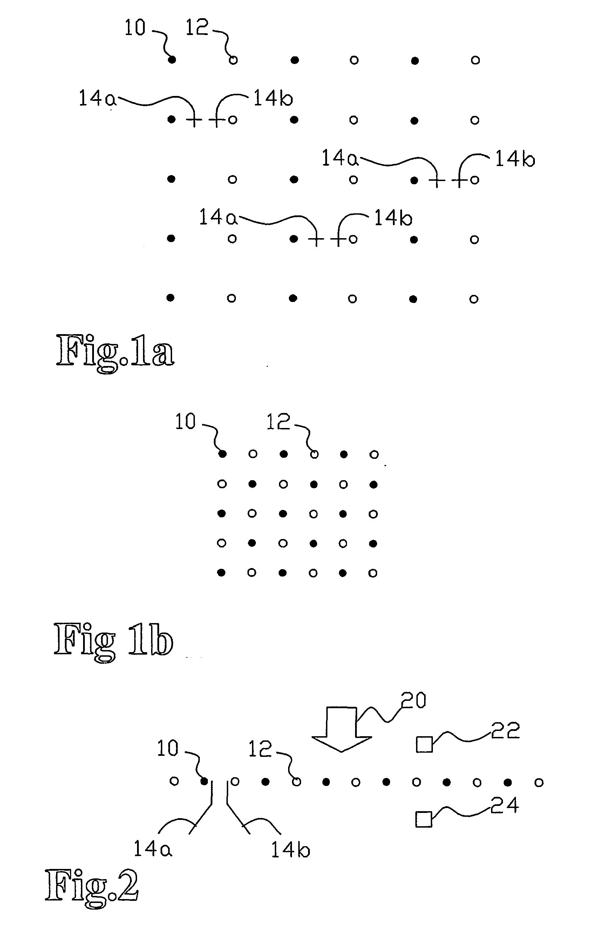

Figures 1a,b show parts of arrays of cathodes 10 (marked by closed circles) and anodes 12 (marked by open circles) inserted in the soil in a land area. Figure 1a shows how alternate rows of cathodes and rows of cathodes may be used. Figure 1b shows how a matrix of cathodes 10 may be used, with anodes 12 each time in the middle between four cathodes 10. In addition to the anodes and cathodes in figure 1a pairs of sensing electrodes 14a,b are shown to be inserted in the soil at locations selected so that a voltage difference between anodes and cathodes results in a voltage drop between the sensing electrodes of a pair. These sensing electrodes have been omitted from figure 1b for the sake of clarity, but it will be understood that they may be used in the arrangement of figure 1b as well.

Figure 2 shows an array that may be used in a land area where there is groundwater flow (with a flow direction indicated by arrow 20). In this case a linear array of alternate cathodes 10 and anodes 12 along a line transverse to the direction of groundwater flow may be used. A pair of sensing electrodes 14a,b is shown symbolically. In addition, groundwater level sensors 22, 24 are shown upstream and downstream of the line.

Cathodes 10 and anodes 12 are inserted in the soil of a land area that is filled by the array, at positions as shown in the figures. An electrical power supply is coupled to the cathodes 10 and anodes 12, to drive electrical current through the soil. In addition, liquid supply systems may be provided to supply liquid to anodes 12 and cathodes 10.

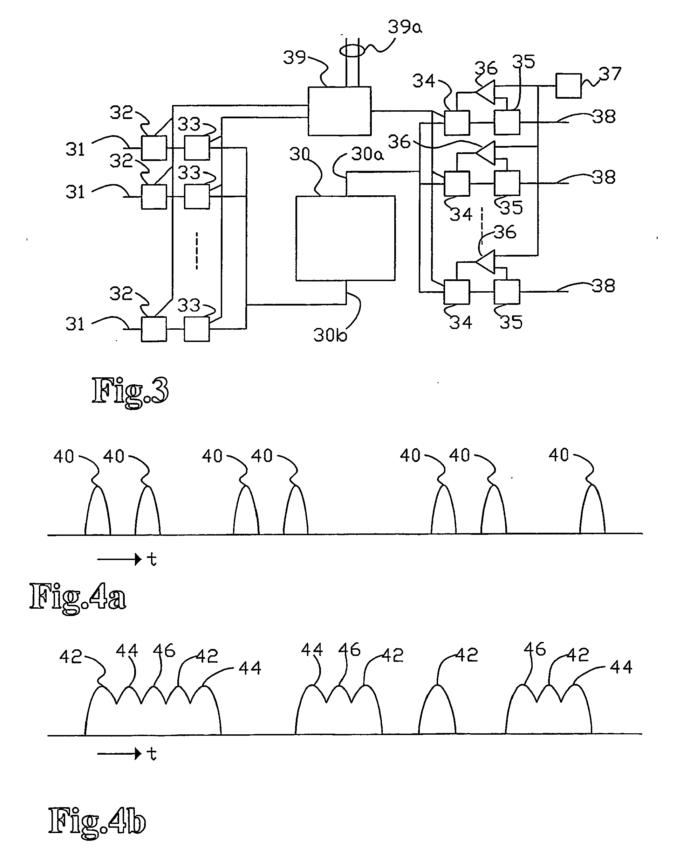

Figure 3 schematically shows an electrical power supply apparatus. The apparatus has cathode connections 31 for connecting individual cathodes 10 (not shown) and anode connections 38 for connecting individual anodes 12 (not shown). The apparatus contains a power supply source 30 such as a generator or a transformer coupled to an electricity network, cathode current switches 32, cathode current sensors 33, anode current controllers 34, anode current sensors 35, anode current feedback circuits 36, a current reference source 37 and a control circuit 39.

A first terminal 30a of power supply source 30 is coupled to respective anode connections 38, each through a respective branch via a respective succession of an anode current controller 34 and an anode current sensor 35. Although a single output line is shown for first terminal 30a is shown, it should be understood that in the case of an AC power supply source 30 this output line may represent a plurality of first output conductors (e.g. three), for different power supply current phases. All these output conductors for different phase outputs may be connected to each anode current controller 34, or respective phase output conductors may be coupled to respective groups of anode current controller 34.

An output of anode current sensor 35 in each branch is coupled back to anode of the current controller 34 in the branch via the anode current feedback circuit 36 for the branch, which is also coupled to current reference source 37. A second terminal 30b of power supply source 30 is coupled to respective cathode connections 31, each through a respective branch via a succession of a cathode current switch 32 and a cathode current sensor 33. Current sensors 33, 35 may be implemented for example as Hall sensors (known per se), which measure magnetic fields induced by the currents, or voltage sensors, which measure voltage drops over resistances in the paths to connections 31, 38.

Control circuit 39 is coupled to outputs of cathode current sensors 33 and to outputs and/or inputs anode current controllers 34 (inputs and/or outputs shown as respective single lines, but it will be understood that separate lines may be used for different sensors or controller and for input and output, or that a communication bus may be used). Control circuit 39 also has an input 39a for coupling to one or more pairs of sensing electrodes 14a,b (not shown).

In operation anode current controllers 34 regulate each anode current to a set level. In a preferred embodiment each current controller 34 contains a switch arranged to switch a conductive connection between the first terminal of electric power supply source 30 and anode connections 38 on and off, with a ratio between the part of the time during which the switch is on and off respectively so that the average anode current has the set level.

In a preferred embodiment electric power supply source 30 is an AC source and current controllers 34 switch the conductive connections on and off only at the time when the output voltage levels at the terminals of electric power supply source 30 cross each other.

Figure 4a shows the voltage at an anode output connection 28 in the case where a single phase is supplied to each current controller 34. In this case current controllers 34 switch on the conductive connection only during positive half cycles, when the voltage at first terminal 30a is higher than that at second terminal 30b. The connection is switched off at the time of zero crossing when there is no voltage difference between the first and second terminal 30a,b. Thus a positive half voltage phase 40 is applied to anode connections 38. Current controller 34 does not pass all positive half phases provided by power supply source 30. The fraction of half cycles during which the conductive connection is on is dependent on the required average anode current.

Figure 4b shows the voltage at an anode output connection 28 in the case where three phases are supplied to each current controller 34. In respective cycle parts 42, 44, 46 the voltage is determined by establishing a conductive connection to respective ones of the phase output conductors of first terminal 30a. In this case current controllers 34 switch on the conductive connection from respective phase output conductor of first terminal 30a alternatingly, or switch all conductive connections off. Current controllers select the time of transitions between on and off cycle parts 42, 44, 46, at the time of crossing with the next voltage that is switched on or, if all connections are switched off, at the time of zero crossing of the voltage of the last connected phase output conductor with the voltage at second terminal 30b. The connections are kept switched on only while the voltage at the connected phase output conductor is higher than that of second terminal 30b. During part of the time current controller 34 does not connect any of the phase output conductors to an anode output connection 38, or at least not the phase output conductor that has the highest voltage. The fraction of cycle parts during which the conductive connections between the output phase conductors and anode output connection 38 is on is dependent on the required average anode current.

The apparatus may be applied to drive various processes in the soil, including for example electrokinesis and heating. The use of electrokinesis for soil remediation is described in US patent No 5,433,829. Prior to installation of the electrodes and the apparatus exploratory measurements are performed (usually including sampling and measurements on samples) to determine soil properties such as electrical soil resistivity, response to electric current and soil composition. Dependent on the results of the measurements a method of treatment is selected. For a give method of treatment parameters of the remediation process are selected, such as the number of anodes 12 and cathodes 10 and the mutual distance at which these anodes and cathodes will be placed in the soil, the size of currents that will be passed from the anodes 12 and cathodes 10 into the soil and the duration of the remediation process.

The selectable size of the current is limited by the risk of corruption of the anodes 12 and cathodes 10. When high currents (e.g. 10 Ampere per meter of anode or cathode) are used it is generally necessary to supply liquids to the anodes 12 and cathodes 10. US patent No 5,433,829 describes how the anodes 12 and cathodes 10 can be placed in the ground in containers through which liquid is circulated, the containers having walls that are permeable for charged particles but much less permeable for the bulk of the liquid. In the case of anodes 12 the liquid typically is water (if necessary with an added base to improve the removal of acids , but usually normal water suffices). In the case of cathodes 10 the liquid generally contains an acid in order to compensate hydroxyl ions generated by the currents through the cathodes 10. In this case the maximum useful current is determined by the rate at which hydroxyl ion scan be removed by the circulating liquid.

Preferably, two liquid circulation systems are provided: one for the cathodes and one for the anodes. Liquid is pumped from storage tanks through conduits that are connected to the electrode containers and back from the containers to the storage tank. pH of liquid supplied to cathodes or anodes can be controlled by controlling an flow of acid or base from a supply vessel to the circulating liquid. Conductivity, redox potential and contaminant concentrations can be controlled by the rate of refreshing the electrolyte. Temperature in the soil and near the electrodes can be controlled by temporarily cut off current. In the anode electrolyte: pH can be controlled by adding $Ca(OH)_2$, NaOH, and redox potential can be controlled by adding $Ca(OH)_2$, NaOH. Conductivity can be controlled by refreshing the electrolyte. Contaminant concentrations can be controlled by refreshing or treating the electrolyte

The various possible processes that may be controlled with this apparatus will now be described in more detail.

**Electrokinetic processing**

In general the electrokinetic process is used when contaminants have to be removed from the soil. Under influence of the electric field between the anodes 12 and cathodes the contaminants move through the soil to the anodes or cathodes, where they are captured.

Of the contaminant(s) to be removed, it is preferred that the chemical structure, the form in which the contaminant is present (bound to the soil, liquid phase, solid phase, dissolved in the ground water), the distribution over the site and/or the concentration of the contaminant(s) are determined. For efficient decontamination, it is preferred that not only the amount of contaminants is determined but also the total quantity of charged particles in the soil, and/or the electric conductivity of the soil.

For effective decontamination it is preferred that the contaminant is mainly present in a charged state (as an ion, ion complex, etc), because the electrokinetic velocity of the contaminant is directly proportional to the electric field strength and its effective electrophoretic or ion mobility, the latter being dependent on the effective charge of the contaminant.

The speed at which decontamination takes place may be influenced by altering the effective mobility, such as by changing the pH. In case of removal of heavy metals, the pH is preferably acidic, to ensure a high charge and suppress binding to the soil material. During the electrokinetic process the pH may be brought to a desired value, *e.g.* by electrokinetically transporting acid/base from electrode liquid (or a liquid injected near an electrode) through the soil. In general the pH is preferably decreased in case of heavy metals (e.g. to a value in the range of 1 to 5 for instance about 3), and the pH is preferably increased in case of contaminants such as arsenic or cyanide (*e.g.* to a value in the range of XX8 to XX12 for instance about 10). Before the electrokinetic decontamination a suitable (or optimal) pH is determined in the laboratory by altering the pH and checking the electric conductivity and the concentrations of the contaminants in the soil water. The soil is mixed with acid or base and the required quantity of gram equivalents protons or hydroxyl ions, needed for a specific pH change may be determined. This information can be used to regulate the pH during the electrokinetic step, by using the $H^+$ and $OH^-$ formed at the electrodes due to electrolysis.

One or more acids, bases and/or complexing agents may be supplied at the beginning and/or during the electrokinetic process. The choice of such additives may be based upon the lab tests. The skilled person will know how to perform such tests and how to choose appropriate additives based upon common general knowledge and the information disclosed herein, dependent on the type of contamination, soil composition etc.

Further, electrokinetic lab tests may be performed with samples of contaminated soil material, which may or may not be mixed with acid/base/complexing agents. The samples may be evaluated for their decontamination speed under different conditions, such as at different current densities ($A/m^2$).

For example, for clay-like or sand with relatively small particles very good results have been achieved at a pH of about 3. The gram equivalent amount protons per $m^3$ needed to reduce the pH to 3 has been found in a range e about 100 - 2000 gramequivalent $H^+ /m^3$.

The results of the electrokinetic tests and the exchange tests can be used into a calculation model, that can be used to determine the practical conditions for the decontamination. The electric charge (Ampere second or Faraday) per volume unit of soil material that has passed, is an indication for the progress of the decontamination.

Changes in temperature, acidity, solubility of contamination and other substances, humidity etc, that occur in the soil and at the electrodes during remediation have an effect on the electrical conductivity of the soil material. These changes are relatively slow and may be predicted and monitored with current and voltage measurements.

The electrode containers can be inserted horizontally, vertically or at an angle in the soil. The container of the electrode may be made of ceramic material, or surrounded with a layer that is permeable for charged particles but much less for uncharged particles (e.g. Bentonite) if only electrically charged particles should be transported from the soil.. Apart from ceramic material tubes of PVC- PE en HDPE may be used. The supply and abduction conduits for electrode liquids can be made of the same type of material. Connections for these conduits to the electrode housings depend on the way the electrodes are placed and other local circumstances, such as groundwater level, the need to place the conduits underground etc. Circulation of liquid should take place along the entire active electrode surface. This can be realized with electrostatic pressure difference between supply and abduction conduits, by pumping or pressurizing. Anode materials such as graphite, noble metals, titanium or ebonex coated with noble metals may be used for the processes involved. The implementation depends on the electrode housing. To prevent energy loss and undesired heating a large electrode surface is desirable. Useful shapes are bars, wires, cables plates or grids. The cathode may contain graphite, (stainless) steel etc., dependent on the type of contaminants and may have the shapes mentioned for the anodes.

Once the desired current has been selected the anodes and cathodes have been inserted into the soil. The anodes and cathodes may then be connected to the anode and cathode connections of the apparatus of figure 3 and the apparatus may be set to supply on average the selected current to the cathodes.

Control circuit 39 monitors whether anodes 12 and cathodes 10 function properly and causes the apparatus to intervene if this is not the case. Current controllers 34 determine information about the average output voltages supplied to respective anode connections 38.

This information is sent to control circuit 39. In the case of current control by on/off switching the information about the average output voltage may be information about the fraction of time that the current is "on".

Cathode current sensors 33 sense the average currents drawn by respective cathode connections 31 and provide information about these currents to control circuit 39.

Control circuit 39 is typically implemented as a suitable programmed micro-controller. In one aspect control circuit 39 monitors whether increases occur in the resistance of the paths from individual cathodes 10 into the soil. When such an increase for a particular cathode 10 exceeds a predetermined threshold level, control circuit 39 causes the cathode current switch 33 of the connection 31 to this particular cathode 10 to block current from the particular cathode 10 for a time interval of predetermined length, e.g. fifteen minutes.

The increase of resistance is taken to be a signal that hydroxides precipitate at or near the surface of the cathode. This may be the result for example of locally different properties of the soil near the cathode (e.g. a locally higher concentration of Ca ions) or of fluctuations in acid supply. If the precipitation process would be allowed to proceed too long at a cathode, a crust would form on that cathode that makes the cathode irrevocably useless. By temporarily cutting of the cathode current the formation of hydroxides is interrupted and the acid from the circulating gets the opportunity to dissolve the precipitated hydroxides.

Of course, the invention is not limited to this implementation or indeed to the particular circuit of figure 3. For example, it will be understood that instead of using current control circuits for individual anodes, current control circuits may be provided for individual cathodes. In this case the current at the cathode may be adjusted directly.

As another example, instead of cutting off the cathode current to a particular cathode altogether, the cathode current may be merely reduced to a level substantially (e.g. at least 10%) below the level at which there is an equilibrium between the rate of generation of hydroxyl ions due to the current and their removal by the circulating liquid with acid. The reduction can be realized by switching off the cathode switch 33 of a particular cathode for which an increase of resistance has been detected with a corresponding duty cycle. In another embodiment the cathode current from a particular cathode may be reduced by switching off, or reducing, the current from one or more anodes that have been inserted in the soil near the particular cathode.

For this purpose control circuit 39 preferably has available information that indicates which of the anode connections 38 has been connected to an anode that has been inserted in the soil near the cathodes that are connected to specific ones of the cathode connections 31. This may be realized by storing information about the position of the cathodes and anodes in control circuit 39. Alternatively, it may be required to connect anodes and cathodes that have been inserted in the ground near to one another to predetermined pairs of an anode connection 38 and a cathode connection 31, control circuit 39 reducing the current to the anode connection 38 of a pair when the resistance of the cathode connected to the cathode connection of a pair increases.

Preferably, the current to cathodes for which substantially no resistance increase is detected is maintained at the normal level while the current is reduced for selected cathodes. Alternatively, the current to the entire array of anodes and cathodes, or to a subgroup of a plurality of cathodes and/or anodes may be temporarily switched off or reduced. But this is not necessary, since it has been found that precipitation of hydroxides does not generally start at the same time at all cathodes. Therefore switching off many cathodes each time when one cathode has increased resistance would lead to unnecessary production loss and longer process duration. This is preferably avoided by switching off or reducing the current only to selected electrodes.

When the resistance near a particular cathode increases repeatedly it may be desirable to adjust the current supplied by nearby anodes permanently by a small amount (e.g. in a step of 1%) to prevent hydroxide formation so that the cathode does not have to be switched off too often.

The determination of the resistance increase at or near the surface of the cathodes can be realized in various ways. In a preferred embodiment, information about the resistance between a cathode and a nearest anode is used to decide whether to reduce the current through that cathode, after correction of the effect of the resistivity $\rho$ of the soil. Correction for the effect of the resistivity $\rho$ of the soil is desirable because this resistivity $\rho$ can change during the process, for example due to chemical or physical changes in the soil due to the current and/or external factors.

When each of the anodes supply a controlled current I an indication of the resistance of the cathode plus that of the soil can be obtained from the voltage difference $V_{ac}$ between the cathode and a nearby anode (or between the voltage at the cathode and average of voltages at nearby anodes):

$$V_{ac} = I \times (R_{soil} + R_{cathode})$$

Control circuit 39 preferably substantially eliminates the effect of changes in the contribution $R_{soil}$ of the soil, for example by subtracting a prediction of $I \times R_{soil}$ from $V_{ac}$. Control circuit 39 can make this prediction by using a measured value $V_{drop}$ of a voltage drop between a pair of test electrodes 14a,b that have been inserted in the soil in the vicinity of the anode and the cathode under consideration. Assuming that the constant current I supplied to the anodes leads to a constant current density J in the soil, the voltage drop $V_{drop}$ is proportional to the resistivity $\rho$ of the soil times this current density. As a result $I \times R_{soil}$ can be predicted by mutliplying $V_{drop}$ by a factor $\lambda$:

$$ I \times R_{soil} = \lambda V_{drop} $$

Hence, the difference $V_{ac} - X V_{drop}$ may be used as an indication of the resistance near the cathode, where $\lambda$ depends on geometrical factors, such as the distance between the test electrodes and the distance between the anodes and cathodes. $\lambda$ does not depend on the properties of the soil, so that it can be set once in control circuit 39, for subsequent use.

Preferably, coordinates of the sensing electrodes relative to the anodes and cathodes and/or coordinates of the anodes and cathodes are used to compute $\lambda$ for each given pair of sensing electrodes. This computation may be performed by control circuit 39, which receives the coordinates for this purpose. Alternatively, the computation may be performed off-line, $\lambda$ values being entered in control circuit 39 for respective pairs of electrodes. In another embodiment control circuit 29 is pre-programmed with $\lambda$ values for sensing electrodes at specified positions and the sensing electrodes are inserted at those positions.

It may be noted that the elimination of the effect of the resistivity of the soil need not be perfectly accurate. It suffices that most of the effect of resistivity of the soil is eliminated, so that the effects of resistance changes due to the precipitation of hydroxides in an amount that can still be removed by the acid in the circulating liquid exceed the effect of the resistivity of the soil. Therefore $\lambda$ need only be known approximately. As an alternative, a ratio $V_{ac} : V_{drop}$ is determined as an indication of the resistance near the cathode. This ratio still depends slightly on soil resistivity, but less than $V_{ac}$, so that it can be used as a more reliable criterion for cathode resistance with knowledge of $\lambda$.

In general, it is expected that the resistivity $\rho$ of the soil varies only slowly as a function of time and position in the land area in which anodes and cathodes have been inserted. Therefore, it is generally not necessary to place different pairs of test electrodes 14a,b near each particular cathode. Measurements of $V_{drop}$ obtained from a pair of test electrodes 14a,b that has been inserted into the soil nearer to another cathode may be used to eliminate the effect of soil resistance on the voltage $V_{ac}$ obtained for a particular cathode. Thus much fewer test electrode than anodes and cathodes suffice.

It should be appreciated that elimination of the effect of the resistivity of the soil can be realized in other ways. For example, a test electrode may be inserted in the soil near each cathode outside the cathode housing. In this vase control circuit 39 may use the voltage drop between the cathode and the nearby electrode as an indication of the resistivity near the cathode. As another example, a time profile of the changes of the resistivity of the soil may predicted from laboratory experiments with a sample of the soil. This time profile can be programmed into control circuit 39 and used to correct effect of the resistivity of the soil similarly as described in the preceding.

In yet another alternative information about the resistivity of the soil may be obtained by measuring the resistance between a pair of anodes, e.g. by imposing a test voltage between two anodes while the current to nearby other electrodes is temporarily switched off. In another alternative, control circuit 39 may use the difference $V_{ac}^{(1)} - V_{ac}^{(2)}$ between the anode-cathode voltages $V_{ac}^{(1)}$, $V_{ac}^{(2)}$ of different anode-cathode pairs while predetermined currents are supplied, to determine whether a resistance increase near the cathode of one of the pair occurs. In another example, the difference between the average current through a particular cathode and an average of the currents through nearby cathodes may be used as an indication of an increase in resistance.

## Electrokinetic screen processing

A so-called hydrological screen has been proposed in the art to stop contaminations in ground water flows or to capture such contaminants. This screen is formed by pumping (contaminated) ground water to the surface. A disadvantage of such a screen is the large amount of water that usually needs to be pumped and that subsequently needs to be purified in a water decontamination process.

Alternatively or in combination with a hydrological screen, an electrokinetic screen may be employed. Such screen does not have the disadvantage of having to purify large amounts of water. The electrokinetic screen is formed by electric fields between alternating electrodes as shown in figure 2. The electric fields are typically applied transverse to the flow direction of the ground water. Preferably the screen is applied essentially perpendicular to said flow direction.

The electrokinetic screen can be used to capture charged contaminants, for instance heavy metals or cyanides. In the electric field the direction of movement of such compounds occurs at an angle to the direction of ground water flow, so that the compounds reach the electrodes rather than continuing to flow with the groundwater stream. The electrodes are usually placed in a housing, which is filled with circulating electrode liquid to remove the trapped compounds. Basically, the operation is similar to that during, electrokinetic treatment, except that it suffices to provide electrodes only along a line instead of an area, because the groundwater flow ensures that the contamination is moved to that line. An important advantage of using a electro screen is the low volume of electrode liquid that needs to be treated to remove the contaminant, and which is in general comparable to a water treatment in electrokinetic decontamination.

For satisfactory removal of the contaminants a sufficiently strong average electric field strength of constant polarity (DC) is generally needed in the soil. If the electric field strength is too small part of the contaminants will not be sufficiently be deflected to reach the electrodes before the contaminants are carried on by the groundwater flow.

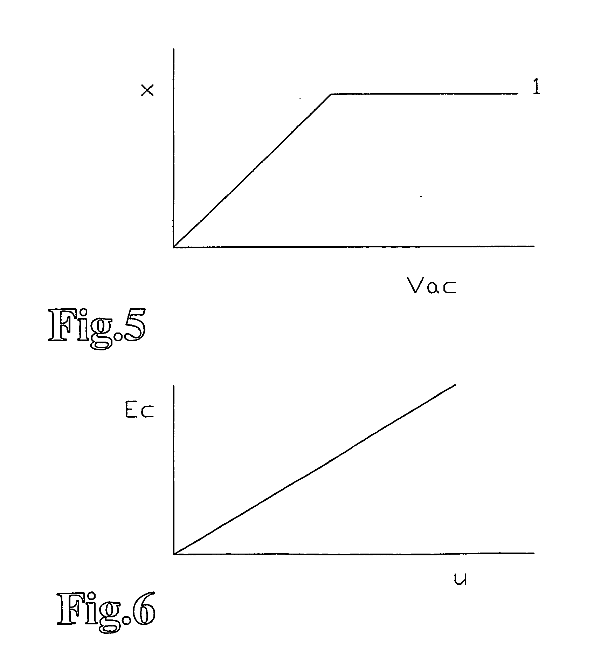

Figure 5 illustrates this effect with a graph of the fraction x of captured contaminants as a function of anode-cathode voltage $V_{ac}$. As can be seen the fraction x increases with the voltage $V_{ac}$ until a critical field strength $E_c$ is realized in the soil, above which substantially all contaminants are captured. This critical field strength depends on the charge and mobility of the contaminants in the soil and on the flow speed of the groundwater flow.

Figure 6 illustrates a graph of a prediction of the critical field strength $E_c$ as a function of groundwater flow speed u. Given measurements of the properties of a sample of the soil this prediction can be made by mathematical methods known per se e.g. from Schaum's on line series on Electrical Power Systems van Syed A. Nasser (1990, ISBN 0-07-0459177) Chapter 3. The prediction can also be determined experimentally, on laboratory scale or in field application for example by observing the amount of collected contaminant for different electric fields and groundwater flow speed.

During electrokinetic screen processing the apparatus that applies electric voltages to the anodes and cathodes receives information about the groundwater flow speed and adjusts the anode-cathode voltage difference to the received information. In principle, the apparatus of figure 3 may be used, wherein the current controllers 34 contain switches and the current control loops with control circuit 36 are deactivated. In this case control circuit 39 controls the switches in current controllers 34 so that the average voltage (i.e. the fraction of time that the switches in current controllers 34 conduct) is adapted dependent on the information about groundwater flow speed. Control circuit 39 uses an internal memory (not shown separately) wherein information has been programmed that determines the required anode-cathode voltages that will be applied as a function of groundwater flow speed. The required voltages correspond to the critical field strengths (or in general slightly higher field strengths) that have been predicted for the particular soil and contamination under treatment and correspond essentially to figure 5. Any convenient representation may be used to represent the dependence on groundwater flow speed, such as a table of voltage values for different flow speeds, or coefficients of a polynomial function that expresses field strength as a function of flow speed, or any other set of parameters that specifies such a function. Control circuit 39 sets the time averaged anode-cathode voltage, to the voltage for the measured flow speed, as determined by using information from the memory. As a result the voltage is substantially equal to or slightly higher than needed to realize the critical field strength at the measured flow speed.

It may be appreciated that the adaptation need not be instantaneous. Common average groundwater flow speeds are very small (of the order of 1-100 meters per year) so that it suffices that the time averaged voltage is substantially equal to the voltage needed to realize the average critical field strength over a timescale of weeks or months only.

Information about the groundwater flow speed may be obtained by measuring the difference between ground water levels at positions upstream and downstream from one another e.g. near the screen. The ground water level difference is proportional to the ground water flow speed and may be used directly to regulate the electric field between any two electrodes. Of course other measurements of groundwater flow speed may be used, such as temperature gradients etc.

Preferably the apparatus (and in the case of the apparatus of figure 3 control circuit 36) also receives information about a voltage drop between a pair of sensing electrodes placed in any soil region where an anode and cathode pair generates a measurable electric field. In this embodiment control circuit 36 stores information about the voltage drops that have to be realized between the sensing electrodes for respective measured flow speeds. The specified voltage drops correspond to the critical field strengths, or are slightly higher. The apparatus adjusts the anode cathode voltage so that the measured voltage drop between the sensing electrodes reaches a specified level for the measured groundwater flow speed. Use of this type of voltage drop measurement eliminates the effect of changes due to resistances changing at or near the electrodes. It will be appreciated that, instead of the voltage drop between a pair of sensing electrodes, the voltage drop from a sensing electrode and one of the anodes or cathodes may be used, if it is predicted that resistance variations near that anode or cathode do not significantly affect the measurement. This is often the case for anodes.

## Electrokinetic bioscreen processing

Soil material containing uncharged organic contaminant(s), for instance halogenated hydrocarbons, such as per- tri- and dichloroalkylenes (*e.g.* per- tri- and dichloroethylenes) may be decontaminated in accordance with the invention by biological degradation. Biological degradation thereof may be accomplished by applying a electrically charged carbon source such as lactate, acetate, citrate or the like, a charged nitrogen source such as ammonium chloride and/or a charged phosphor source such as (sodium hexa meta)phosphate through the soil by means of electrokinetic migration. Microorganisms in the soil are then capable to adequately degrade organic contaminants. Anaerobic microorganisms have been found very suitable for removing Perchloroethylene, Trichloro-ethelene etc.

Aerobic microorganisms are suitable for removing organic contamant(s) like PCA (polycyclic aromates) ,BTEX contaminants (benzene, toluene etc.). In this case Nitrates, hexamataphoshates may supplied electrokinetically through the soil.

The electric field used for the electrokinetic migration, which usually has a constant polarity (DC), is referred to as an electrokinetic bioscreen.

Configurations as shown in figures 1 and 2 may be used. Infiltration filters, comprising said carbon, nitrogen and/or phosphor source(s) may be part of the anode and/or cathode assemblies, or separate infiltration filters may be placed in the soil within the influence sphere of the electrodes. When there is a groundwater flow the infiltration filters are preferably placed upstream of the electrodes (in view of the ground water flow). An advantage of using infiltration filters is the reduction in energy that is required to keep the bioscreen intact.

During electrokinetic bioscreen processing the apparatus that applies electric voltages to the anodes and cathodes receives information about the groundwater flow speed and adjusts the anode-cathode current or voltage difference to the received information.

The amount of nutrients electromigrated from the anode and cathode into the soil is proportional to the cumulative amount of current through the electrodes. The amount of nutrients needed for biodegradation of the contaminants are calculated from laboratory measurements of the concentration of these contaminants and from field measurements of the amount of groundwater flowing through the screen. In the laboratory test the efficiency per Faraday can be estimated of each component of a desired mixture of nutrients. Thus, a minimum of current through a pair of electrodes (anode and cathode) is required in the case of the electrokinetic biosecreen. In addition also the critical electric field related to the groundwater flow is important to ensure that nutrients move through the entire width of groundwater flow through the screen.

In this case, the apparatus is arranged so that both at least the critical field strength and at least the required minimum current are realized. If sufficient current flows when the critical field strength is realized, the anode-cathode voltage is kept at or slightly above the level needed to realize this field strength. If insufficient current flows when the critical field strength is realized, the anode-cathode voltage is raised to a level that results in sufficient current, above the level needed to realize the critical field strength.

Generally, for a specific soil either the first or the second type of anode cathode voltage control is needed, so that the apparatus can be arranged to perform one form of control accordingly. In some soils, a cross-over may occur so that there is a critical ground water flow speed above which one type of anode cathode voltage control is needed and below which the other type of anode cathode voltage control is needed. In this case, the apparatus can be programmed to select the appropriate type of control, for example by providing for a minimum anode-cathode voltage and regulating voltage to a higher level if the current is below the required level.

In principle, the apparatus of figure 3 may be used. In this case control circuit 39 controls the reference current source 37 so that the average current is adapted dependent on the information about groundwater flow speed.

Control circuit 39 uses an internal memory (not shown separately) wherein information has been programmed that determines the required anode-cathode voltages and/or current that will be applied as a function of groundwater flow speed. The required voltages correspond to the critical field strengths (or in general slightly higher field strengths) that have been predicted for the particular soil and contamination under treatment and correspond essentially to figure 5. The required currents correspond to the current (or in general slightly higher currents) that have been predicted to be needed to transport sufficient nutrients for the particular soil and contamination under treatment. Any convenient representation may be used to represent the dependence on groundwater flow speed.

Control circuit 39 is arranged to set the time averaged anode-cathode voltage as described before or it activate current regulation to the level required for the measured flow speed, as determined by using information from the memory. Alternatively control circuit 39 may be arranged to activate and deactivate current regulation, the current regulation being deactivated when the average anode-cathode voltage is below the required level for the measured ground water flow speed, after which the voltage is regulated, the current regulation being activated if the average current is below the required level for the measured ground water flow speed.

It may be appreciated that the adaptation need not be instantaneous. Common average groundwater flow speeds are very small (of the order of 1-100 meters per year) so that it suffices that the average voltage and current are above the average critical voltage and current over a timescale of weeks or months only. Similarly, it may be appreciated that one or more sensing electrodes may be used to permit regulation of field strength in the soil independent of resistance variations at the anodes and/or cathodes.

**Electro phytoremediation processing**

Phytoextraction is suitable in case of diffuse contaminations, which may for instance be the result of deposition of contaminants, such as heavy metals from the air. Fast growing plant such as rape or a grasses are repeatedly sown. The growing plants collect a part of the heavy metals. The heavy metals are removed by harvesting the plants (e.g. every three months or so).. Phytoextraction is laborious and time consuming because a plurality of sowing/harvesting cycles is usually required for removing a substantial amount of the contaminants, due to the limited influence sphere of the root system of the plants.

The efficiency can be improved by combining phytoextraction with an electrokinetic treatment. Thus metals are mobilised and allowed to migrate through the soil that contains the root system of the plants, thus in effect increasing the sphere of influence of the root system. Thus, an electric field improves the efficiency of phytoremediation.

Because the contaminants do not need to migrate towards an electrode, a relatively simple electrode construction may advantageously be used in this case. Anodes and cathodes encased in bentonite may be used for example, without liquid circulation system. To obtain the required migration of contaminant(s) through or near the root zone of the plants a DC voltage may be applied. However, when the anodes and cathodes have no circulation system there is a risk of electrode clogging. Use of Bentonite around the electrodes can increase the time interval until clogging occurs, because Bentonite has a buffer capacity for receiving protons at the anode and hydroxyl ions at the cathode. Other materials may be used that have similar buffering properties. However, even in this case clogging will occur.

This can be prevented by regularly changing the polarity of the current. The selection of the frequency of such polarity changes requires a trade-off. A relatively high frequency reduces the risk of clogging, but it minimizes the distance over which contaminants are transported, thereby reducing efficiency. On the other hand a low frequency increases efficiency at the expense of an increased risk of clogging.

A suitable moment to switch polarity may be determined based upon the mobility of the contaminant(s) and the applied electric field strength. Preferably, the moment at which to switch the polarity is determined based upon the charge, i.e. the integral of the current, that has passed the electrode since the last switch (or since starting the process). Using samples of the soil a safe charge is determined that can be passed without risk of clogging, preferably taking into account the pH-buffering capacity of the material (e.g. the bentonite) around the electrodes. The polarity is reversed each time this charge has been reached. It has been found that thus the pH is kept at a favourable value, especially in the vicinity of the electrodes.

During phytoextraction processing the apparatus that applies electric voltages to the anodes and cathodes receives information about current and integrates the current to select the time of polarity reversal. In principle, the apparatus of figure 3 may be used, wherein the current controllers 34 contain switches. Dependent on a selected polarity control circuit 39 commands switches in current controllers 34 to conduct current only when the first terminal of power supply source is positive relative to the second terminal or when the first terminal of power supply source is negative relative to the second terminal. The current control loops with control circuit 36 may be activate, but this is not necessary.

Control circuit 39 receives information about the anode and/or cathode current from sensors 33, 35 (if the anode current is controlled no sensor information from anode current sensors 35 is needed). Control circuit 39 stores a programmed charge threshold value and integrates the current until any of the electrodes has reached the charge threshold value. If so control circuit changes the selected polarity. In practice the polarity is typically changed after a period of half a day to a couple of days, depending on the circumstances.

In principle, the cumulated charge may be measured for a plurality of electrodes individually, the polarity being reversed for the entire array when any one of the measured charges reaches a threshold level. Thus, local variations in the soil can be accounted for. Alternatively, cumulative charge for a single anode or cathode or joint charge for a group of anodes or cathodes may be used to trigger polarity reversal, assuming homogeneous conditions in the ground.

In practice, it has been found advantageous to combine an electrokinetic technique such as described herein with electrophyto-remediation. Such process may suitably be carried out using electrodes, which preferably are positioned essentially horizontally, spaced apart several meters (in particular about 2 to 20 m, wherein the electrodes (e.g. of stainless steel, ebonex™, coated titanium) are optionally placed in a housing which housing is optionally provided with moist or another electrically conductive material with ion buffering capacity (*e.g.* bentonite). The electrically conductive material is preferably used in order to ensure a good contact between soil and electrodes and to provide a certain buffer capacity for the produced protons at the anode and hydroxyl ions at the cathode).

The electric voltage) between the electrodes is preferably regulated by monitoring the electrical potential over a part of the soil material (using one or more sensing electrodes as described above), so that a desired field strength is realized. The required field strength is selected on the basis of a trade-off. The roots of the plants are able to absorb contaminants at a certain rate only. If the electric field is too high a fraction of the contaminants will be moved on from the roots before it can be absorbed. Thus, electric power is wasted. If the electric field is too small the contaminants will be depleted before they are replace under influence of the electric field, making it necessary to have many harvests. The field strength is selected so high that the rate of supply of contaminants under influence of the electric field substantially matches the maximum possible take-up rate of the roots. The required electric field is calculated from information about the plants and laboratory measurements of the mobility of contaminants. Calculation methods for that purpose are commonly known in the art.

The desired electrical voltage difference between the electrodes is set to the calculated value based upon the mobility of the contaminant(s).

An important advantage of electro-phytodecontamination is the low electrical power that is required in comparison to a process wherein only use is made of electrokinetic decontamination. In particular, electro-phyto decontamination may very suitably be used with a system operating on a sustainable energy source, for instance wind energy or solar energy. Thus, such a process is very interesting in (remote) areas wherein no regular energy source is available.

## Soil heating processing

Heating of the soil material can contribute to an accelerated decontamination both in biological conversion and in chemical oxidation techniques. Direct heating by electrical soil heating is very suitable, even in case of poorly permeable soil materials. Both AC and DC currents can be employed. Use of DC currents allows for electromigration of additives such as nutrients respectively oxiding agents (in particular electrically charged additives) throughout the soil material. Soil heating by a process according to the invention has been found very suitable in for promoting the decomposition of a contamination from medium, in particular water or air from the soil material.

For solely heating the soil an AC voltage is preferred. The electrolysis at the electrodes has been found considerably less than with a DC voltage or even completely absent. Heating may very suitably be carried out without using recirculation of electrode liquids, if used at all. Preferred electrode materials are selected from iron, steel and graphite. Preferred shapes are selected from tubular shape, rod-shaped, bar-shaped and cable-shaped.

Preferably, the electrode, in particular in case of a metal electrode, is placed in a holder to avoid direct contact of the electrode with the soil. Thus deposition of minerals such as clay minerals or carbonates on the electrodes is avoided or at least reduced. Suitable holders include ceramic filters and plastic filters wherein the electrode is placed together with graphite particles to allow a sufficient conductance.

The dimensions and configuration of the electrodes can be chosen depending upon the conditions. The skilled person will know how to choose these appropriately. For instance the electrodes may be placed vertically, horizontally or at an angle with the soil. The energy may be taken from a mains circuit or an electro-generator. In case of an AC voltage, it may be supplied in 12 phases, 6 phases, 3 phases, one phase or otherwise. Good results have *inter alia* been achieved with electrode configuration in a triangular or hexagonal set-up.

In general heating tends to be highest near the electrodes, because of the high current density. In order to prevent drying up or even boiling of the vicinity of the electrodes, the current through each electrode or at least through a number of the electrodes is regulated.

During heating the apparatus that applies electric voltages to the electrodes regulates the current, for example so that on average a specified temperature or at most a specified temperature occurs in the soil, which is compatible for example with PVC conduits in the soil

In principle, the apparatus of figure 3 may be used. When AC field are used during heating complete cycles of the electric voltage from supply source 30 may be passed through current controllers 34. The average current is regulated by selecting the fraction of cycles, or half cycles of supply source 30 in which current is conducted to connections 38. Since AC current is preferably used, preferably the same number of positive and negative cycles is passed, e.g. by passing selected full cycles of the AC signal from supply source 30.

Preferably, current controllers 34 are arranged to select the cycles so that time intervals of at least one minute exist in which no current is passed. It has been found that this promotes the release of steam bubbles from the electrodes, which lowers the resistance of the electrodes.

Boiling near the electrodes may be detected and counteracted as electrode clogging described for electrokinetic processing.

Optionally a supply of water is operated at the vicinity of the electrodes to regulate the humidity of the vicinity of the electrodes. Control circuit may activate the supply of water when boiling is detected near the electrodes. Another measure against drying up is supplying water around the electrodes to counteract the water loss and the use of a material like Bentonite around the electrodes.

Electric heating may be combined with *in situ* chemical oxidation of contaminant(s). An increased temperature usually results in an acceleration of the oxidation rate or helps to start the reaction, *e.g.* if a peroxide is used. Good results have *inter alia* been achieved with a process wherein the temperature of the soil is raised to a value in the range of about 35-45°C.

It will be appreciated by now that the apparatus shown in figure 3 can be applied to various different forms of in situ soil processing. Preferably the apparatus is installed in a closed unit, for example in the form of a ISO standard size container, which can be driven to a land area that needs to be treated, connected to electrodes (including anodes and cathodes) that have been inserted into the soil and left there operating for months or years to treat the soil according to any selected process.

No separate, different apparatuses are needed for different forms of processing. Dependent on the selected process different forms of control are used and different information may have to be programmed into control circuit 39. Control circuit 39 may contain programs to perform all described forms of processing, a particular form being selected by an external command when the apparatus is activated, or the appropriate program may be loaded when the apparatus is activated.

However, it should be appreciated that instead of an AC power supply source a DC power supply source may be used. In this case, the average current or voltage may be regulated by adjusting a duty cycle during which this DC power supply source is connected to the anodes and/or cathodes. Reversal of polarity can be realized by commuting the output connections to the DC power supply source.

**Claims**

1. A method of in situ electroremediation of soil material, the method comprising

    - placing a plurality of electrodes (10, 12) in the soil at respective positions in a land area;
    - supplying electric current through the electrodes (10, 12);

    **characterized by**

    - obtaining information indicative of electrical resistances of paths from surfaces of respective ones of the electrodes (10, 12) into the soil;
    - detecting whether increases occurs in the electrical resistances;
    - temporarily cutting down electrical current at least through a particular electrode (10, 12) in the path from which an increase of the electrical resistance is detected, to a stepped down level, in response to said detection.

2. A method according to Claim 1, wherein voltage differences are applied between electrodes (10) from a first group and electrodes (12) from a second group, said monitoring comprising measuring overall resistance information indicative of resistances from respective electrodes (10) of the first group to one or more neighboring electrodes (12) from the second group, said overall resistance information being used to detect the resistance increases, the method comprising eliminating at least part of an effect of soil resistivity on said detecting.

3. A method according to Claim 2, comprising

    - placing at least one further electrode (14a,b) in the soil at a distance from said electrodes (10, 12);
    - measuring voltage drop information indicative of a voltage drop along a path through the soil starting from said further electrode (14a.b);
    - using the voltage drop information to remove at least part of an effect of soil resistivity on the overall resistance information on said detecting.

4. A method according to Claim 1, comprising

    - placing a plurality of further electrodes (14a,b) in the soil, each at a distance from a respective electrode (10, 12) but closer to said respective electrode (10, 12) than any one of the other electrodes (10, 12);
    - measuring a voltage drop from each of the further electrodes (14a,b) to its respective electrode (10, 12);
    - determining the information indicative of electrical resistances from the measured voltage drops.

5. A method according to Claim 1, wherein the information indicative of electrical resistances of paths into the soil from surfaces of respective ones of the electrodes (10, 12) is obtained for respective ones or sub-groups of the electrodes (10, 12) individually; the current being cut down only in a particular electrode (10, 12) or group, in response to detection of said increase in resistance in the path from the particular electrode (10, 12) or sub-group.

6. A method according to Claim 1, wherein the electrodes (10, 12) include anodes (12) and cathodes (10) placed interspersed with one another in the soil, the method further comprising

    - circulating liquid containing acid and/or another complexing agent around the surface of the cathodes (10);
    - obtaining said information indicative of electrical resistances of paths into the soil from surfaces of respective ones of the cathodes (10);
    - temporarily cutting down electrical current at least through a particular cathode (10) in the path from which an increase of the electrical resistance is detected, to a stepped down level, in response to said detection.

7. A method according to Claim 6, wherein the current is cut down for a predetermined time interval.

8. A method according to Claim 7, wherein the predetermined time interval has a duration of between five minutes and two hours.

9. A method according to Claim 6, wherein the current to the particular cathode is cut down substantially to zero.

10. A method according to Claim 6, wherein the current through a particular anode (12) that is placed closest to the particular cathode (10) is stepped down to cut down the current through the particular cathode (10).

11. A method according to Claim 6, wherein the current through individual anodes (12) and/or cathodes (10) is controlled to maintain a regulated average level, independent of soil resistivity, while not cut down.

**12.** A method according to Claim 11, wherein the set level substantially equals an equilibrium level at which a rate of formation of hydroxyl ions due to the current is in equilibrium with a rate of removal of the hydroxyl ions by acid from the circulating liquid.

**13.** A method according to Claim 11, wherein the stepped down level is substantially below the equilibrium level.

**14.** A system for performing in situ electroremediation of soil material, the system comprising

- a plurality of electrodes (10, 12) in the soil at respective positions in a land area;
- an electric power supply source (30) coupled to supply electric current through the electrodes (10, 12);

**characterized by**

- a control circuit (39) arranged to monitor information indicative of electrical resistances of paths into the soil from surfaces of respective ones of the electrodes (10, 12), to detect increases of the electrical resistances and to temporarily cut down electrical current from the electric power supply source (30) at least through a particular electrode in the path from which an increase of the electrical resistance is detected, to a stepped down level, in response to detection of said increase.

**15.** A system according to Claim 14, wherein opposite poles (30a,b) of the electric power supply source (30) are coupled to a first and second group of electrodes respectively, the system comprising sensors (33) coupled to respective connections between the electric power supply source (30) and respective ones of the electrodes (10, 12), the sensors (33) being arranged to provide the control circuit (39) with information indicative of respective current-voltage ratio's, each between a current through a respective electrode (10) from the first group and a voltage difference between the respective electrode (10) from the first group and one or more electrodes from the second group (12), the control circuit (39) deriving the information indicative of electrical resistances for each respective electrode (10) from the respective current-voltage ratio for that respective electrode (10).

**16.** A system according to Claim 15, wherein the control circuit is arranged to eliminate at least part of an effect of soil resistivity on the information indicative of respective current-voltage ratio's on the detection of the increases.

**17.** A system according to Claim 16, comprising

- at least one further electrode in the soil at a distance from said electrodes (10, 12), the further electrode (14a,b) coupled to the control circuit (39);
- the control circuit (39) being arranged to obtain voltage drop information indicative of a voltage drop through the soil along a path starting from said further electrode (14a,b) and to use the voltage drop information to eliminate at least part of an effect of soil resistivity on the information indicative of respective current-voltage ratio's on the detection of the increases.

**18.** A system according to Claim 14, comprising

- a plurality of further electrodes (14a,b) in the soil, each at a distance from a respective electrode (10) but closer to said respective electrode (10) than any one of the other electrodes, the further electrodes (14a,b) being coupled to the control circuit (39);
- the control circuit (39) being arranged to obtain the information indicative of the electrical resistances from information indicative of voltage drops from the further electrodes (14a,b) to their respective electrodes (10).

**19.** A system according to Claim 14, wherein the information indicative of electrical resistances of paths into the soil from surfaces of respective ones of the electrodes (10, 12) is monitored for the respective ones of the electrodes (10, 12) individually; the current being cut down selectively through a particular electrode in the path from which an increase of the electrical resistance is individually detected, to a stepped down level, in response to said increase.

**20.** A system according to Claim 14, wherein the electrodes include anodes (12) and cathodes (10) placed interspersed with one another in the soil, the system further comprising

- a liquid circulation sub-system arranged to circulate liquid containing acid and/or other complexing agents around the surface of the cathodes (10);
- the control circuit (39) monitoring said information indicative of electrical resistances of paths into the soil from surfaces of respective ones of the cathodes (10), and temporarily cutting down electrical current at least through a particular cathode (10) in the path from which an increase of the electrical resistance is detected, to a stepped down level, in response to said increase.

**21.** A system according to Claim 20, wherein the current is cut down for a predetermined time interval.

**22.** A system according to Claim 20, wherein the current to the particular cathode is cut down substantially to zero.

**23.** A system according to Claim 20, wherein the current through a particular anode (12) that is placed closest to the particular cathode (10) is stepped down to cut down the current through the particular cathode (10).

**Patentansprüche**

**1.** Verfahren zur in situ-Elektrosanierung von Bodenmaterial, wobei das Verfahren folgendes umfasst:

- das Plazieren einer Vielzahl von Elektroden (10, 12) in den Boden an entsprechenden Stellen in einer Landfläche;
- Einspeisen von elektrischem Strom durch die Elektroden (10, 12);
**gekennzeichnet durch**
- das Erhalten von Information, die auf die elektrischen Widerstände der Wege von den Oberflächen der jeweiligen Elektroden (10, 12) in den Boden schliessen lässt;
- das Detektieren, ob Zunahmen der elektrischen Widerstände auftreten;
- das vorübergehende Senken des elektrischen Stroms zumindest **durch** eine bestimmte Elektrode (10, 12) in dem Weg, in dem eine Zunahme des elektrischen Widerstands detektiert wird, auf ein abgestuftes Niveau als Antwort auf die Detektion.

**2.** Verfahren gemäss Anspruch 1, worin Spannungsdifferenzen zwischen Elektroden (10) der ersten Gruppe und Elektroden (12) der zweiten Gruppe angelegt werden, wobei die Überwachung die Messung der Gesamtwiderstandsinformation umfasst, die auf die Widerstände von den jeweiligen Elektroden (10) der ersten Gruppe zu einer oder mehreren benachbarten Elektroden (12) der zweiten Gruppe schliessen lässt, wobei die Gesamtwiderstandsinformation zur Detektion der Widerstandszunahmen verwendet wird, wobei das Verfahren das Eliminieren mindestens eines Teils einer Wirkung des spezifischen Bodenwiderstands auf die Detektion umfasst.

**3.** Verfahren gemäss Anspruch 2, umfassend:

- das Plazieren mindestens einer weiteren Elektrode (14a, b) in den Boden in einer Entfernung von den Elektroden (10, 12);
- das Messen der Spannungsabfallinformation, die auf einen Spannungsabfall entlang eines Weges durch den Boden, ausgehend von der weiteren Elektrode (14a, b), schliessen lässt;
- die Verwendung der Spannungsabfallinformation zur Entfernung von mindestens einer Wirkung des spezifischen Bodenwiderstands auf die Gesamtwiderstandsinformation beim Detektieren.

**4.** Verfahren gemäss Anspruch 1, umfassend:

- das Plazieren einer Vielzahl von weiteren Elektroden (14a, b) in den Boden, jeweils in einer Entfernung von einer entsprechenden Elektrode (10, 12), jedoch näher zu der entsprechenden Elektrode (10, 12) als eine der anderen Elektroden (10, 12);
- das Messen eines Spannungsabfalls von jeder der weiteren Elektroden (14a, b) zu der entsprechenden Elektrode (10, 12);
- das Ermitteln der Information, die auf die elektrischen Widerstände schliessen lässt, aus den gemessenen Spannungsabfällen.

**5.** Verfahren gemäss Anspruch 1, worin die Information, die auf die elektrischen Widerstände der Wege in den Boden, ausgehend von den Oberflächen der jeweiligen Elektroden (10, 12), schliessen lässt, individuell für die jeweiligen oder Untergruppen der Elektroden (10, 12) erhalten wird; wobei der Strom lediglich in einer bestimmten Elektrode (10, 12) oder Gruppe als Reaktion auf die Detektion der Zunahme des Widerstands in dem Weg der bestimmten Elektrode (10, 12) oder Untergruppe gesenkt wird.

**6.** Verfahren gemäss Anspruch 1, worin die Elektroden (10, 12) Anoden (12) und Kathoden (10) einschliessen, die miteinander durchsetzt in den Boden plaziert werden, wobei das Verfahren ferner folgendes umfasst:

- das Zirkulierenlassen einer Flüssigkeit, die Säure und/oder ein weiteres Komplexierungsmittel enthält, um die Oberfläche der Kathoden (10) herum;
- das Erhalten der Information, die auf die elektrischen Widerstände der Wege in den Boden, ausgehend von den Oberflächen der jeweiligen Kathoden (10), schliessen lässt;
- das vorübergehende Senken des elektrischen Stroms zumindest durch eine bestimmte Kathode (10) in dem Weg, in dem eine Zunahme des elektrischen Widerstands detektiert wird, auf ein abgestuftes Niveau als Reaktion auf die Detektion.

**7.** Verfahren gemäss Anspruch 6, worin der Strom für einen vorbestimmten Zeittakt gesenkt wird.

**8.** Verfahren gemäss Anspruch 7, worin der vorbestimmte Zeittakt eine Dauer zwischen 5 Minuten und 2 Stunden aufweist.

**9.** Verfahren gemäss Anspruch 6, worin der Strom zu der bestimmten Kathode im wesentlichen auf Null gesenkt wird.

**10.** Verfahren gemäss Anspruch 6, worin der Strom durch die bestimmte Anode (12), die am nächsten zu der bestimmten Kathode (10) plaziert ist, abgestuft wird, um den Strom durch die bestimmte Kathode (10) zu senken.

**11.** Verfahren gemäss Anspruch 6, worin der Strom durch einzelne Anoden (12) und/oder Kathoden (10) zur Aufrechterhaltung eines geregelten durchschnittlichen Niveaus unabhängig vom spezifischen Bodenwiderstand kontrolliert wird, ohne dabei gesenkt zu werden.

**12.** Verfahren gemäss Anspruch 11, worin das eingestellte Niveau im wesentlichen einem Gleichgewichtsniveau gleicht, bei dem die Geschwindigkeit der Bildung von Hydroxylionen aufgrund des Stroms im Gleichgewicht mit der Geschwindigkeit der Entfernung von Hydroxylionen durch Säure aus der zirkulierenden Flüssigkeit ist.

**13.** Verfahren gemäss Anspruch 11, worin das abgestufte Niveau im wesentlichen unterhalb des Gleichgewichtsniveaus liegt.

**14.** Anordnung zur Durchführung einer in situ-Elektrosanierung von Bodenmaterial, wobei die Anordnung folgendes umfasst:

    - eine Vielzahl von Elektroden (10, 12) in dem Boden an entsprechenden Stellen in einer Landfläche;
    - eine elektrische Stromquelle (30), die angeschlossen ist, um elektrischen Strom in die Elektroden (10, 12) einzuspeisen;
    **gekennzeichnet durch**
    - einen Steuerstromkreis (39), der zur Überwachung von Information angebracht ist, die auf die elektrischen Widerstände der Wege in den Boden, ausgehend von den Oberflächen der jeweiligen Elektroden (10, 12), schliessen lässt, um Zunahmen der elektrischen Widerstände zu detektieren und den elektrischen Strom aus der elektrischen Stromquelle (30) zumindest **durch** eine bestimmte Elektrode in dem Weg, in dem eine Zunahme des elektrischen Widerstands detektiert wird, auf ein abgestuftes Niveau als Antwort auf die Detektion der Zunahme vorübergehend zu senken.

**15.** Anordnung gemäss Anspruch 14, worin die Gegenpole (30a, b) der elektrischen Stromquelle (30) mit einer ersten bzw. zweiten Gruppe der Elektroden verbunden sind, wobei die Anordnung Sensoren (33) umfasst, die mit entsprechenden Verbindungen zwischen der elektrischen Stromquelle (30) und den jeweiligen Elektroden (10, 12) verbunden sind, wobei die Sensoren (33) so angeordnet sind, dass sie den Steuerstromkreis (39) mit Information versorgen, die auf die jeweiligen Strom-Spannungsverhältnisse, jeweils zwischen einem Strom durch eine entsprechende Elektrode (10) aus der ersten Gruppe und einer Spannungsdifferenz zwischen der entsprechenden Elektrode (10) aus der ersten Gruppe und einer oder mehreren Elektroden aus der zweiten Gruppe (12), schliessen lässt, wobei der Steuerstromkreis (39) die Information, die auf die elektrischen Widerstände für jede entsprechende Elektrode (10) schliessen lässt, aus dem entsprechenden Strom-Spannungsverhältnis für die entsprechende Elektrode (10) bezieht.

**16.** Anordnung gemäss Anspruch 15, worin der Steuerstromkreis so angeordnet ist, dass er mindestens einen Teil einer Wirkung des spezifischen Bodenwiderstands auf die Information eliminiert, die auf die entsprechenden Strom-Spannungsverhältnisse bei der Detektion der Zunahmen schliessen lässt.

**17.** Anordnung gemäss Anspruch 16, umfassend:

    - mindestens eine weitere Elektrode in dem Boden in einer Entfernung von den Elektroden (10, 12), wobei die weitere Elektrode (14a, b) mit dem Steuerstromkreis (39) verbunden ist;
    - den Steuerstromkreis (39), der so angeordnet ist, dass eine Spannungsabfallinformation erhalten wird, die auf einen Spannungsabfall durch den Boden entlang eines Weges, ausgehend von der weiteren Elektrode (14a, b), schliessen lässt, und die Spannungsabfallinformation zur Eliminierung von zumindest einem Teil einer Wirkung des spezifischen Bodenwiderstands auf die Information verwendet wird, die auf die entsprechenden Strom-Spannungsverhältnisse bei der Detektion der Zunahmen schliessen lässt.

**18.** Anordnung gemäss Anspruch 14, umfassend:

    - eine Vielzahl von weiteren Elektroden (14a, b) in dem Boden, jeweils in einer Entfernung von einer entsprechenden Elektrode (10), jedoch näher zu der entsprechenden Elektrode (10) als jede der anderen Elektroden, wobei die weiteren Elektroden (14a, b) mit dem Steuerstromkreis (39) verbunden sind;
    - den Steuerstromkreis (39), der so angeordnet ist, dass die Information, die auf die elektrischen Widerstände schliessen lässt, aus der Information erhalten wird, die auf die Spannungsabfälle von den weiteren Elektroden (14a, b) zu ihren entsprechenden Elektroden (10) schliessen lässt.

19. Anordnung gemäss Anspruch 14, worin die Information, die auf die elektrischen Widerstände der Wege in den Boden, ausgehend von den Oberflächen der jeweiligen Elektroden (10, 12), schliessen lässt, für die jeweiligen Elektroden (10, 12) einzeln überwacht wird; wobei der Strom selektiv durch eine bestimmte Elektrode in dem Weg, in dem eine Zunahme des elektrischen Widerstands individuell detektiert wird, auf ein abgestuftes Niveau als Antwort auf die Zunahme gesenkt wird.

20. Anordnung gemäss Anspruch 14, worin die Elektroden Anoden (12) und Kathoden (10) einschliessen, die miteinander durchsetzt in dem Boden plaziert sind, wobei die Anordnung ferner folgendes umfasst:

    - eine Flüssigkeitszirkulations-Unteranordnung, die zur Zirkulation von Flüssigkeit, die Säure und/oder andere Komplexierungsmittel enthält, um die Oberfläche der Kathoden (10) angeordnet ist;
    - den Steuerstromkreis (39), der die Information überwacht, die auf den elektrischen Widerstand der Wege in den Boden, ausgehend von den Oberflächen der jeweiligen Kathoden (10), schliessen lässt, und vorübergehend den elektrischen Strom zumindest durch eine bestimmte Kathode (10) in dem Weg, in dem eine Zunahme des elektrischen Widerstands detektiert wird, auf ein abgestuftes Niveau als Reaktion auf die Zunahme senkt.

21. Anordnung gemäss Anspruch 20, worin der Strom für einen vorbestimmten Zeittakt gesenkt wird.

22. Anordnung gemäss Anspruch 20, worin der Strom zu der bestimmten Kathode im wesentlichen auf Null gesenkt wird.

23. Anordnung gemäss Anspruch 20, worin der Strom durch eine bestimmte Anode (12), die am nächsten zu der bestimmten Kathode (10) plaziert ist, abgestuft wird, um den Strom durch die bestimmte Kathode (10) zu senken.

**Revendications**

1. Procédé d'électro-dépollution sur site de matériau de sol, le procédé consistant à :

    - placer une pluralité d'électrodes (10, 12) dans le sol à des positions respectives dans une zone de terre ;
    - appliquer un courant électrique à travers les électrodes (10, 12) ;

    **caractérisé par**

    - l'obtention d'informations indicatives des résistances électriques de trajets à partir des surfaces des électrodes respectives parmi les électrodes (10, 12) dans le sol ;
    - détecter si des augmentations apparaissent dans les résistances électriques ;
    - diminuer temporairement le courant électrique au moins à travers une électrode (10, 12) particulière dans le trajet à partir de laquelle une augmentation de la résistance électrique est détectée, à un niveau inférieur, en réponse à ladite détection.

2. Procédé selon la revendication 1, dans lequel des différences de tension sont appliquées entre les électrodes (10) d'un premier groupe et les électrodes (12) d'un deuxième groupe, ladite surveillance comprenant la mesure des informations de résistance globale indicatives des résistances des électrodes (10) respectives du premier groupe à une ou plusieurs électrodes (12) voisines du deuxième groupe, lesdites informations de résistance globale étant utilisées pour détecter les augmentations de résistance, le procédé comprenant l'élimination d'au moins une partie d'un effet de résistivité du sol sur ladite détection.

3. Procédé selon la revendication 2, consistant à :

    - placer au moins une autre électrode (14a, b) dans le sol à une distance desdites électrodes (10, 12) ;
    - mesurer des informations de chute de tension indicatives d'une chute de tension le long d'un trajet à travers le sol en commençant par ladite autre électrode (14a, b) ;
    - utiliser les informations de chute de tension pour retirer au moins une partie d'un effet de résistivité du sol sur les informations de résistance globale sur ladite détection.

4. Procédé selon la revendication 1, consistant à :

    - placer une pluralité d'autres électrodes (14a, b) dans le sol, chacune à une distance d'une électrode (10, 12) respective, mais plus près de ladite électrode (10, 12) respective que l'une quelconque des autres électrodes (10, 12) ;
    - mesurer une chute de tension de chacune des autres électrodes (14a, b) à son électrode (10, 12) respective ;
- déterminer les informations indicatives des résistances électriques à partir les chutes de tension mesurées.

5. Procédé selon la revendication 1, dans lequel les informations indicatives des résistances électriques de trajets dans le sol à partir des surfaces d'électrodes respectives parmi les électrodes (10, 12) sont obtenues pour les électrodes respectives ou des sous-groupes des électrodes (10, 12) individuellement ; le courant étant diminué uniquement dans une électrode (10, 12) particulière ou un groupe, en réponse à la détection de ladite augmentation de la résistance dans le trajet à partir de l'électrode (10, 12) particulière ou du sous-groupe.

6. Procédé selon la revendication 1, dans lequel les électrodes (10, 12) comprennent des anodes (12) et des cathodes (10) placées intercalées les unes avec les autres dans le sol, le procédé consistant en outre à :

- faire circuler un liquide contenant un acide et/ou un agent complexant autour de la surface des cathodes (10) ;
- obtenir lesdites informations indicatives des résistances électriques de trajets dans le sol à partir des surfaces de cathodes respectives parmi les cathodes (10) ;
- diminuer temporairement le courant électrique au moins à travers une cathode (10) particulière dans le trajet à partir de laquelle une augmentation de la résistance électrique est détectée, à un niveau inférieur, en réponse à ladite détection.

7. Procédé selon la revendication 6, dans lequel le courant est diminué pendant un intervalle de temps prédéterminé.

8. Procédé selon la revendication 7, dans lequel la durée de l'intervalle de temps prédéterminé est entre cinq minutes et deux heures.

9. Procédé selon la revendication 6, dans lequel le courant vers la cathode particulière est diminué sensiblement à zéro.

10. Procédé selon la revendication 6, dans lequel le courant à travers une anode (12) particulière qui est placée le plus près de la cathode (10) particulière est abaissé pour diminuer le courant à travers la cathode (10) particulière.

11. Procédé selon la revendication 6, dans lequel le courant à travers des anodes (12) individuelles et/ou des cathodes (10) individuelles est commandé pour maintenir un niveau moyen régulé, indépendant de la résistivité du sol, tout en n'étant pas diminué.

12. Procédé selon la revendication 11, dans lequel le niveau fixé est sensiblement égal à un niveau d'équilibre auquel un taux de formation d'ions hydroxyles dus au courant est en équilibre avec un taux de retrait des ions hydroxyles par un acide du liquide en circulation.

13. Procédé selon la revendication 11, dans lequel le niveau inférieur est sensiblement au-dessous du niveau d'équilibre.

14. Système pour effectuer une électro-dépollution sur site d'un matériau de sol, le système comprenant :

- une pluralité d'électrodes (10, 12) dans le sol à des positions respectives dans une zone de terre ;
- une source d'alimentation électrique (30) couplée pour délivrer un courant électrique à travers les électrodes (10, 12) ;

**caractérisé par**

- un circuit de commande (39) agencé pour surveiller des informations indicatives des résistances électriques de trajets dans le sol à partir des surfaces d'électrodes respectives parmi les électrodes (10, 12), pour détecter des augmentations des résistances électriques et pour diminuer temporairement le courant électrique provenant de la source d'alimentation électrique (30) au moins à travers une électrode particulière dans le trajet à partir de laquelle une augmentation de la résistance électrique est détectée, à un niveau inférieur, en réponse à la détection de ladite augmentation.

15. Système selon la revendication 14, dans lequel les pôles (30a, b) opposés de la source d'alimentation électrique (30) sont couplés à un premier et un deuxième groupe d'électrodes respectivement, le système comprenant des capteurs (33) couplés à des connexions respectives entre la source d'alimentation électrique (30) et des électrodes respectives parmi les électrodes (10, 12), les capteurs (33) étant agencés pour délivrer au circuit de commande (39) des informations indicatives de rapports courant/tension respectifs, chacun entre un courant à travers une électrode (10) respective du premier groupe et une différence de tension entre l'électrode (10) respective du premier groupe et une ou plusieurs électrodes du deuxième groupe (12), le circuit de commande (39) déduisant les informations indicatives des résistances électriques pour chaque électrode (10) respective du rapport courant/tension respectif pour cette électrode (10) respective.

**16.** Système selon la revendication 15, dans lequel le circuit de commande est agencé pour éliminer au moins une partie d'un effet de résistivité du sol sur les informations indicatives des rapports courant/tension respectifs sur la détection des augmentations.

**17.** Système selon la revendication 16, comprenant :

- au moins une autre électrode dans le sol à une distance desdites électrodes (10, 12), l'autre électrode (14a, b) étant couplée au circuit de commande (39) ;
- le circuit de commande (39) agencé pour obtenir des informations de chute de tension indicatives d'une chute de tension à travers le sol le long d'un trajet en commençant par ladite autre électrode (14a, b) et pour utiliser les informations de chute de tension pour éliminer au moins une partie d'un effet de la résistivité du sol sur les informations indicatives des rapports courant/tension respectifs sur la détection des augmentations.

**18.** Système selon la revendication 14, comprenant :

- une pluralité d'autres électrodes (14a, b) dans le sol, chacune à une distance d'une électrode (10) respective, mais plus près de ladite électrode (10) respective que l'une quelconque des autres électrodes, 1 les autres électrodes (14a, b) étant couplées au circuit de commande (39) ;
- le circuit de commande (39) agencé pour obtenir les informations indicatives des résistances électriques à partir des informations indicatives de chutes de tension des autres électrodes (14a, b) à leurs électrodes (10) respectives.

**19.** Système selon la revendication 14, dans lequel les informations indicatives des résistances électriques de trajets dans le sol à partir des surfaces d'électrodes respectives parmi les électrodes (10, 12) sont surveillées pour les électrodes respectives parmi les électrodes (10, 12) individuellement ; le courant étant diminué de manière sélective à travers une électrode particulière dans le trajet à partir de laquelle une augmentation de la résistance électrique est détectée individuellement, à un niveau inférieur, en réponse à ladite augmentation.

**20.** Système selon la revendication 14, dans lequel les électrodes comprennent des anodes (12) et des cathodes (10) placées intercalées les unes avec les autres dans le sol, le système comprenant en outre :

- un sous-système de circulation de liquide agencé pour faire circuler un liquide contenant de l'acide et/ou d'autres agents complexants autour de la surface des cathodes (10) ;
- le circuit de commande (39) surveillant lesdites informations indicatives des résistances électriques de trajets dans le sol à partir des surfaces de cathodes respectives parmi les cathodes (10), et diminuant temporairement le courant électrique au moins à travers une cathode (10) particulière dans le trajet à partir de laquelle une augmentation de la résistance électrique est détectée, à un niveau inférieur, en réponse à ladite augmentation.

**21.** Système selon la revendication 20, dans lequel le courant est diminué pendant un intervalle de temps prédéterminé.

**22.** Système selon la revendication 20, dans lequel le courant vers la cathode particulière est diminué sensiblement à zéro.

**23.** Système selon la revendication 20, dans lequel le courant à travers une anode (12) particulière qui est placée le plus près de la cathode (10) particulière est abaissé pour diminuer le courant à travers la cathode (10) particulière.

Fig.1a

Fig 1b

Fig.2

Fig.3

Fig.4a

Fig.4b

Fig.5

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5433829 A
- US 5589056 A
- US 5846393 A
- US 6214202 B
- US 6255551 B
- US 6145244 A

**Non-patent literature cited in the description**

- **van Syed A. Nasser.** Electrical Power Systems. 1990